# EUROPÄISCHE PATENTSCHRIFT

(11) **EP 2 276 576 B1**
(45) Veröffentlichungstag und Bekanntmachung des Hinweises auf die Patenterteilung: **20.06.2018**
(21) Anmeldenummer: 09723605.3
(22) Anmeldetag: 17.03.2009
(51) Int. Cl.: B04B 1/20, F16H 1/46, F16C 33/66, B04B 9/04

(54) **GETRIEBEANORDNUNG FÜR EINE ZENTRIFUGE**
GEAR APPARATUS FOR A CENTRIFUGE
SYSTÈME DE TRANSMISSION POUR UNE CENTRIFUGEUSE

(30) Priorität: 20.03.2008 DE 102008015134
(43) Veröffentlichungstag der Anmeldung: 26.01.2011
(73) Patentinhaber: GEA Mechanical Equipment GmbH, 59302 Oelde (DE)
(72) Erfinder: OSTKAMP, Wilhelm, 59302 Oelde (DE); NEUBAUER, Richard, 59329 Wadersloh (DE)
(74) Vertreter: Kleine, Hubertus
(86) Internationale Anmeldenummer: PCT/EP2009/053135
(87) Internationale Veröffentlichungsnummer: WO 2009/115516

(56) Entgegenhaltungen:
- EP-A- 0 409 791
- WO-A-2004/097255
- WO-A-2005/011871
- DE-U1-202005 001 539
- US-A- 4 941 866
- US-A- 5 772 573

## Beschreibung

Die Erfindung betrifft eine Getriebeanordnung für eine Zentrifuge, insbesondere für eine Vollmantel-Schneckenzentrifuge, nach Anspruch 1.

Zum Antrieb von Dekantern, d.h. von Vollmantel-Schneckenzentrifugen, werden den Antriebsmotoren nachgeschaltete Getriebeanordnungen verwendet, welche Elemente aufweisen, die mit der Trommeldrehzahl rotieren.

Bei Dekantergetriebeanordnungen mit einer Öldauerfüllung ist eine Füllstandskontrolle oder ein Nachfüllen von Getriebeöl im laufenden Betrieb nicht ohne weiteres möglich. Undichtigkeiten, beispielweise zum Produktraum hin, können nur im Stillstand bei Wartungsarbeiten erkannt werden. Darüber hinaus kann sich beim gattungsgemäßen Dekanter im Getriebe ein höherer Druck aufbauen, was vermieden werden soll.

Eine gattungsgemäße Getriebeanordnung ist zudem aus der US 5 772 573 A gemäß dem Oberbegriff des Anspruch 1 bekannt. Zum technologischen Hintergrund werden die WO 2004/097255 A2, die DE 19 18 130 A, die DE 20 2005 001 539 U1, die DE 103 34 370 A1, die EP 0 409 791 B1, die DE 1 009 865 A1 und die DE 1 782 548 A genannt.

Ein Problem bestand nach dem Stand der Technik darin, dass Ölverlust im Getriebe nicht sicher ausgeglichen werden kann. Befindet sich beispielweise eine größere Luftblase im Getriebe, so sind die Bohrungen in der Antriebswelle leer und das Öl müsste entgegen der Fliehkraft von außen in die Welle eintreten. Um ein Nachfließen des Öls zu erreichen, müsste das Öl ferner im Behälter kontrolliert unter Druck stehen, was nicht praktikabel ist.

Die Erfindung hat vor dem Hintergrund des eingangs geschilderten Problems die Aufgabe, dieses Problem zumindest weitgehend zu beheben.

Die Erfindung löst diese Aufgabe durch den Gegenstand des Anspruchs 1.

Geschaffen wird eine Vollmantel-Schneckenzentrifuge mit einer anzutreibenden Trommel und einer vorzugsweise mit einer Differenzdrehzahl zur Trommel anzutreibenden Schnecke, wobei die Getriebeanordnung zwischen wenigstens einen oder mehrere Antriebsmotoren und die Schnecke und die Trommel geschaltet ist und wobei die Getriebeanordnung mit einem fließfähigen Schmiermittel nach Art eines Öls dauergefüllt ist, wobei der Getriebeanordnung ein Schmiermittel-Ausgleichssystem mit einem Schmiermittel-Ausgleichsbehälter zugeordnet ist, welcher über eine Leitung mit wenigstens einem Hohlkanal einer als Hohlwelle ausgebildeten Antriebswelle der Getriebeanordnung verbunden ist, und wobei die Hohlwelle zwei vorzugsweise parallel in axialer Richtung verlaufende Längskanäle aufweist, wobei die Längskanäle außermittig der Drehachse verlaufen oder wobei einer der Längskanäle relativ zur Drehachse mittig und der andere außermittig oder koaxial zum ersten Längskanal verläuft.

Um eventuelle Ölverluste auszugleichen und um im Betrieb rechtzeitig eine Anzeige über eine vorhandene Undichtigkeit zu erhalten, wird oberhalb der Getriebeanordnung ein Ölausgleichsbehälter installiert. Dieser wird über eine Dreheinführung an das Ölvolumen im Getriebe angeschlossen, wobei die Übergabestelle sich axial und zentral an der Antriebswelle des Getriebes befindet. Bei Ölverlust im Getriebe kann Öl aus dem Behälter in das Getriebe nachlaufen. Schäden wird damit auf einfache Weise vorgebeugt.

Durch die Erfindung werden zudem auf einfache Weise Druckunterschiede vermieden bzw. ein Druckaufbau bei Erwärmung im Getriebe verhindert, welches zum "Atmen" und evtl. Eindringen von Schmutz/Wasser führen könnte.

Darüber hinaus werden Ölverluste sicherer erkennbar. So besteht die Möglichkeit zu einem optischen Erkennen von Ölverlust, bevor das Getriebe gefährdet ist.

Zudem wird eine mögliche Kontamination des Schleuderguts (besonders bei innen liegendem Getriebe) erschwert.

Es ist zudem ein Nachfüllen von Öl in das Getriebe bei laufendem Betrieb möglich, wenn die Produktion aufrechterhalten werden muss.

Bei einer Realisierung eines Antriebskonzeptes mit stirnseitig und koaxial zur Antriebswelle montierten Motoren - Direktantrieb genannt - ist das Konzept der zentralen Dreheinführung allerdings nur mit einem höhern technischen Aufwand möglich. Einsetzbar sind aber Motoren mit Hohlwelle, wobei die letztere Variante den vorteilhaften Gegenstand des Anspruchs 3 bildet.

Platziert man die Dreheinführung so, dass sie die hohle Antriebswelle umgreift, muss das Öl über eine Bohrung in der Mantelfläche in die Hohlwelle eintreten. Es ist denkbar, diese Bohrung radial anzubringen und damit auf eine Bohrung bzw. Leitung im Wellenzentrum zu treffen, die dann zum Getriebevolumen führt.

Allerdings versucht bei stillstehendem Getriebegehäuse die drehende Antriebswelle, Öl aus dem Getriebe in den Ausgleichsbehälter zu pumpen, denn das Öl wird in der radialen Bohrung der Welle nach außen beschleunigt. Wenn der Sog groß genug ist, strömt Öl aus und Luft wird unter den dynamischen Dichtungen in das Getriebe gesaugt. Dieser Effekt lässt sich vermeiden, wenn am inneren Ende der Antriebswelle eine gleichwertige radiale Bohrung angeordnet wird.

Vorteilhaft weist die Getriebeanordnung mit der als Hohlwelle ausgelegten Antriebswelle zur weiteren Lösung des eingangs genannten Problems die zwei axial verlaufende Ölbohrungen - die Längskanäle des Anspruchs 1 - auf, die nach einer Variante außermittig gebohrt werden und nebeneinander liegende Querbohrungen erhalten. Alternativ wird eine der Ölbohrungen mittig und die andere außermittig oder beispielsweise zur ersten koaxial ausgebildet.

Dabei werden die Querbohrungen vorzugsweise seitlich versetzt und zueinander schräg (nach dem Schälscheibenprinzip) auf die Längsbohrungen gebohrt.

Dabei ist es besonders vorteilhaft, wenn die Querbohrungen drehrichtungsunabhängig so ausgebildet werden, dass jeweils ein Kanal pumpt und einer saugt. Mit einer entsprechend ausgeführten Drehdurchführung erhält man bei drehendem Gehäuse ein definiertes System: Öl wird gezielt in das Getriebe hineingefördert und Luft herausgefördert. Diese Anordnung hat mehrere Vorteile.

Zunächst ist sie drehrichtungsunabhängig funktionsfähig.

Zudem kann mit ihr ein sicheres Ausbringen von Luft aus dem Getriebe realisiert werden.

Die Lösung ist zudem auf einfache Weise bei Konstruktionen mit einem stirnseitig angeordnetem Sekundärmotor zum Antrieb der Schnecke realisierbar. Sie eignet sich insbesondere für eine Schmierung der Getriebeanordnung mit Öl anstelle von Fett.

Wenn die beiden Kanäle in der Drehdurchführung durch eine Zwischendichtung voneinander entkoppelt und über zwei Schläuche angeschlossen werden, sind auch ein Durchlauf und eine Kühlung denkbar.

Weitere vorteilhafte Ausgestaltungen sind den Unteransprüchen zu entnehmen.

Nachfolgend wird die Erfindung anhand von Ausführungsbeispielen unter Bezug auf die Zeichnung näher beschrieben. Es zeigt:
- Fig. 1: eine Schnittansicht einer Teilbereichs einer nicht beanspruchten schematisch dargestellten ersten Getriebeanordnung, der ein Ölausgleichsbehälter zugeordnet ist;
- Fig. 2: einen Teilbereich einer zweiten, nicht beanspruchten Getriebeanordnung;
- Fig. 3a: einen Schnitt durch einen Teilbereich einer dritten Getriebeanordnung;
- Fig. 3b-e: Schnitte durch verschiedene axiale Bereiche einer Antriebswelle;
- Fig. 4a - e: einen Schnitt durch einen Teilbereich der dritten Getriebeanordnung mit einer Kühlvorrichtung; und
- Fig. 5a - e: einen Schnitt durch einen Teilbereich der vierten Getriebeanordnung; und
- Fig. 6, 7: schematische Darstellungen von Vollmantel-Schneckenzentrifugen.

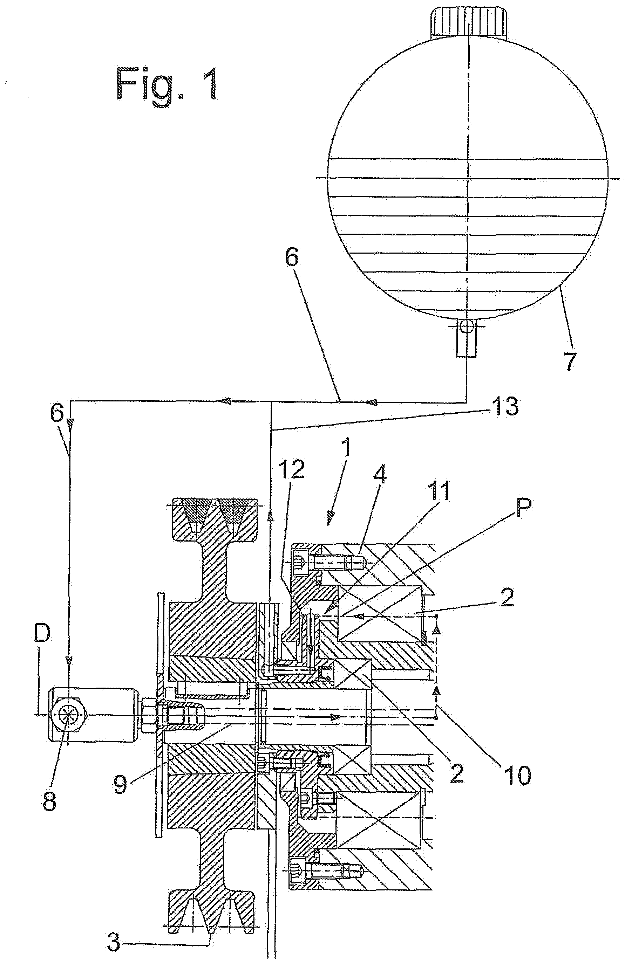

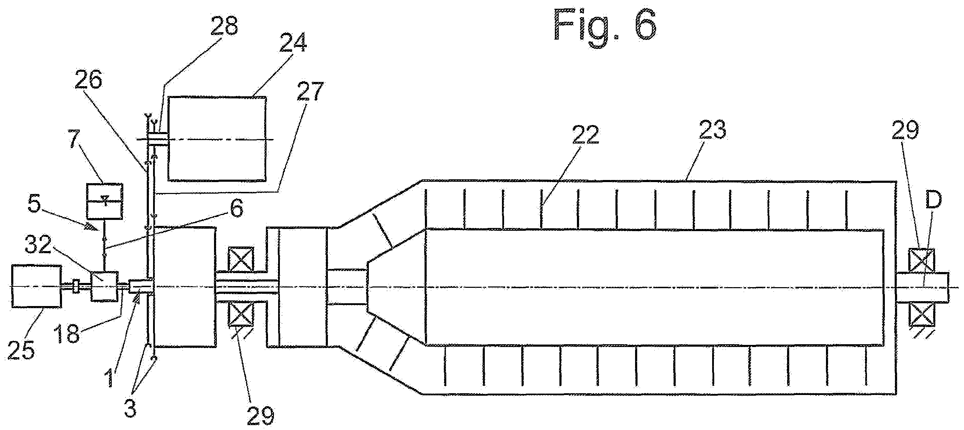

Fig. 1 zeigt eine Schnittansicht durch eine nicht beanspruchte Getriebeanordnung 1 einer Vollmantel-Schneckenzentrifuge. Hinsichtlich der Aufbaus einer Vollmantel-Schneckenzentrifuge wird auf Fig. 6 verwiesen.

Die Vollmantel-Schneckenzentrifuge weist eine Schnecke 22 und eine Trommel 23 auf, wobei die Getriebeanordnung zwischen wenigstens einen oder zwei Antriebsmotoren 24, 25 geschaltet ist.

Die Getriebeanordnung 1 wird im Einbauzustand vorzugsweise derart ausgerichtet, dass sich drehende Teile der Getriebeanordnung 1 jeweils horizontal ausgerichtete Drehachsen aufweisen. Die Hauptdrehachse einer zentralen Antriebswelle 9, 18 (siehe Figur 1 bzw. 3 sowie 5 und 6) ist mit D bezeichnet. Zu den zu schmierenden Elementen der Getriebeanordnung gehören insbesondere mehrere Lager 2.

Die Getriebeanordnung ist als öldauergefüllte Getriebeanordnung ausgelegt. Sie kann an sich in verschiedener Art aufgebaut sein und insbesondere eines oder mehrere Getriebe mit jeweils wenigstens einer oder mehreren Getriebestufen aufweisen, die z.B. als Planetengetriebestufen oder dgl. ausgelegt sein können.

Zur Drehmomenteinspeisung dienen eine oder hier zwei Riemenscheiben 3, die über in Fig. 6 dargestellte Antriebsriemen 26, 27 mit den Abtriebswellen 28 der Antriebsmotoren gekoppelt werden (hier nicht dargestellt, siehe aber Fig. 6).

Die Abtriebswellen 4 (hier nicht im Detail dargestellt) können jeweils drehfest mit der Trommel 23 und einem Schneckenkörper der Schnecke 22 gekoppelt werden.

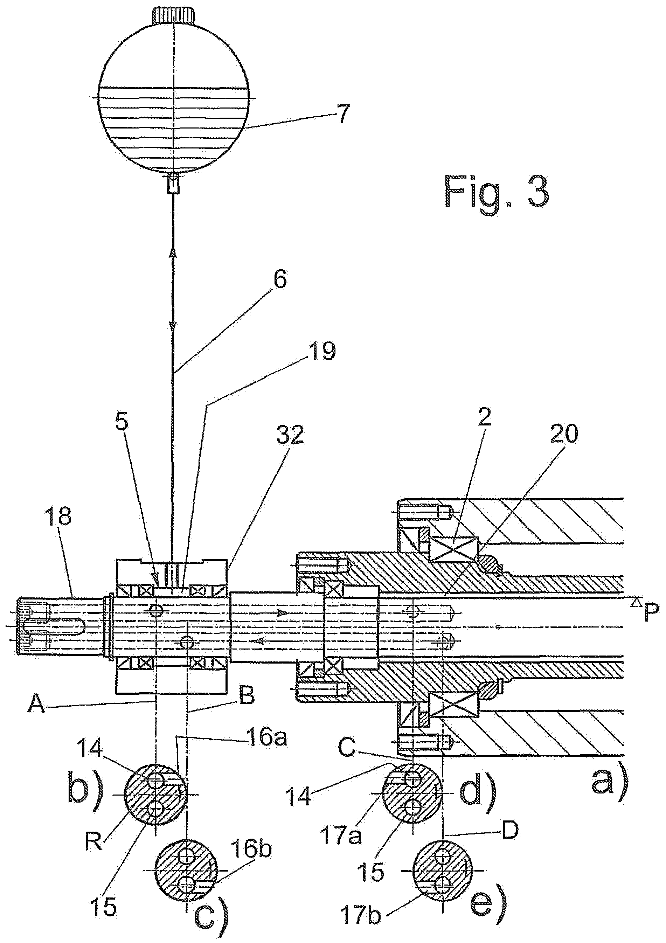

Nach Fig. 3 bis 7 wird der eine Antriebsmotor 25, der zum Antrieb der Schnecke 22 dient, dagegen direkt in axialer Verlängerung der Antriebswelle 18 angeordnet, so dass eine Art Direktantrieb für die Antriebswelle geschaffen wird, an der z.B. ein Antriebs- oder Bremsmoment für die Schnecke in die Getriebeanordnung 1 eingeleitet wird.

Die Getriebeanordnung 1 dient zur Erzeugung einer Differenzdrehzahl zwischen der Schnecke und der Trommel. Die Trommellager an den beiden axialen Enden der Trommel 23 sind mit dem Bezugszeichen 29 versehen.

Zur Schmierung von zu schmierenden Elementen der Getriebeanordnung 1, insbesondere zur Schmierung der Lager 2, wird ein fließfähiges Schmiermittel, insbesondere ein Öl verwendet, welches mit einer Art Schmiermittel-Ausgleichssystem bzw. vorzugsweise Schmiermittel-Ausgleichskreislauf 5 - in die Getriebeanordnung 1 geleitet werden kann.

Der Schmiermittel-Ausgleichskreislauf 5 weist eine Leitung 6 auf (siehe Fig. 1 und 6), an deren von der Getriebeanordnung abgewandten Ende ein bis zu einem gewissen Pegel mit dem Schmiermittel gefüllter Schmiermittel-Ausgleichsbehälter 7 angeordnet ist, der in genügender Höhe oberhalb der Getriebeanordnung 1 angeordnet wird. Vorzugsweise ist der Ölspiegel im Schmiermittel-Ausgleichsbehälter 7 stets höher als der höchste im Getriebe mit Öl zu versorgende Punkt.

Das andere Ende der Leitung 6 mündet hier über eine axiale Drehdurchführung 8 in axialer Verlängerung einer Hohlwelle 9, die auch als Antriebswelle für den Antriebsmotor 25 (insoweit ähnlich zu Fig. 6) dient, in die Hohlwelle 9 der Getriebeanordnung, welche ein- oder mehrstückig ausgelegt sein kann und bevorzugt eine oder mehrere, insbesondere sämtliche Getriebe und/oder Getriebestufen der Getriebeanordnung axial durchsetzt.

Das Schmiermittel kann derart auf einfache Weise axial in den Bereich sämtlicher zu schmierender Elemente, insbesondere der Lager 2, der Getriebeanordnung geleitet werden.

Über vorzugsweise radial von der Hohlwelle 9 abzweigende Kanäle 10 kann das Schmiermittel zu den zu schmierenden Elementen der Getriebeanordnung fließen, von denen es - z.B. über axiale und/oder radial verlaufende Verbindungsräume oder - kanäle- in einen oder mehrere parallel zur Drehachse verlaufenden Ringraum /-räume 11 tritt.

Um einen Kreislauf zu realisieren, wird der radiale Ölspiegel P im Raum 11 durch ein Fördermittel, insbesondere ein schälscheibenartiges Element 12 oder ein Schöpfrohr , begrenzt, welches im Betrieb nicht rotiert bzw. stillsteht, so dass mit ihm nach Art einer Zentripetalpumpe Schmiermittel aus dem sich drehenden System zunächst radial nach innen und dann in eine radial nach außen verlaufende Ableitung 13 abgepumpt wird.

Die Ableitung 13 mündet zwischen dem Schmiermittel-Ausgleichsbehälter 7 und der Getriebeanordnung 1 in die Leitung 6.

Diese Anordnung mit einem schälscheiben- bzw. zentripetalpumpenartigen Element 12 und der bevorzugten Zuleitung in einer Hohlwelle 9 als Zuleitung des Schmiermittel-Ausgleichskreislaufs 5 ermöglicht in einfacher Weise das Einstellen eines definierten Ölspiegels in der Getriebeanordnung bei einer gleichzeitigen Versorgung der inneren Wälzlager 2.

Derart wird auf einfache Weise die Schmierung der zu schmierenden Elemente der Getriebeanordnung sichergestellt.

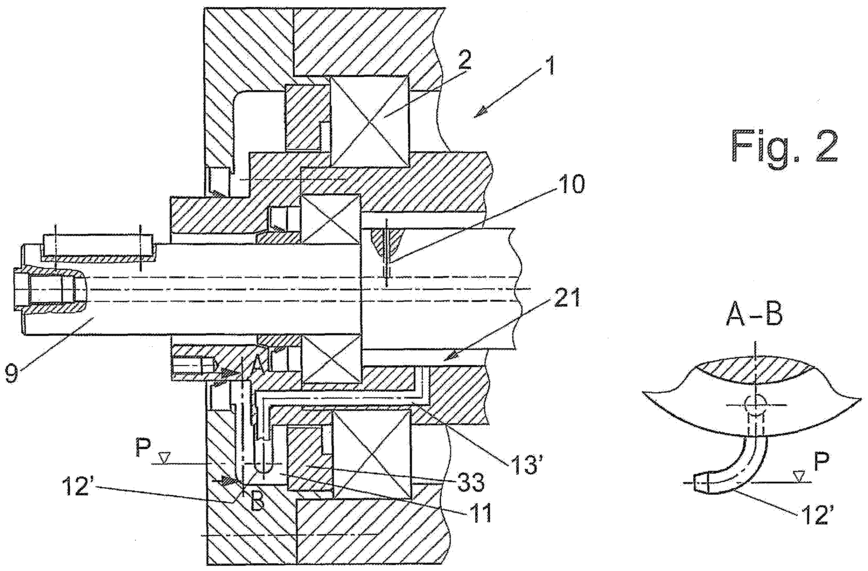

Fig. 2 zeigt einen Ausschnitt einer nicht beanspruchten Getriebeanordnung 1 einer Vollmantel-Schneckenzentrifuge.

Hier erfolgt wiederum über ein Fördermittel wie ein schälscheibenartiges Element oder hier eine Art Schöpfrohr 12', eine Ableitung von Schmiermittel aus einem radial äußeren Bereich der Getriebeanordnung in einen radial inneren Bereich der Getriebeanordnung, wobei hier die Ableitung 13' aus dem Schöpfrohr zurück in einen radial inner gelegenen Raum 21 der Getriebeanordnung 1 mündet. Dies ist vorteilhaft, da im Zentrum in der Regel ein niedrigerer Öldruck herrscht als weiter außen, da das Getriebe hier mit einem Ölausgleichbehälter verbunden werden kann (siehe Fig. 1) und nur geringe Fliehkräfte herrschen. Mittels geeigneter Dimensionierung einer Drossel 33 kann der Zulauf in den Ringraum 11 (zur Einstellung der Schmiermitteloberfläche P) beeinflusst werden.

Fig. 3a zeigt einen Teilbereich einer ansonsten hier nicht dargestellten weiteren Getriebeanordnung, die an sich - bis auf den Bereich der Art und Weise der Zuleitung des Schmiermittels in die Getriebeanordnung - ähnlich zur Art der Fig. 1 aufgebaut sein kann, d.h., es ist insbesondere eine Zuleitung aus einem Schmiermittel-Ausgleichsbehälter 7 als Teil eines Schmiermittel-Ausgleichskreislaufs 5 der öldauergefüllten Dekantergetriebeanordnung 1 vorgesehen.

Anders als nach Fig. 1, wo die Drehmomenteinspeisung über Riemenscheiben erfolgt, ist es nach Fig. 3 (und 4) vorgesehen, die jedenfalls abschnittweise als Hohlwelle ausgebildete Antriebswelle 18 zum Einspeisen des Antriebsmomentes für die Schnecke mit einem als Direktantrieb ausgelegten Antriebsmotor für die Schnecke in axialer Verlängerung der Hauptdrehachse der Getriebeanordnung 1 zu koppeln (Fig. 6).

Dabei ist nach Fig. 3 und 4 sowie 5 vorzugsweise vorgesehen, die Ölzuleitung und ggf. eine Luftableitung (wobei in der Luft Öl enthalten sein kann) nicht aus axialer Richtung in die Antriebswelle (Hohlwelle) 18 hinein zu realisieren sondern durch winklig - insbesondere in einer oder mehreren Ebenen parallel zur Radialen zur Drehachse D verlaufende Querbohrungen 16, 17, welche "von der Seite" her in die Hohlwelle 18 münden.

Nach Figur 3 weist die Hohlwelle 18, anders als Figur 1, nicht nur einen einzigen Hohlkanal als Ölzuführleitung auf sondern zwei vorzugsweise parallel in axialer Richtung verlaufende, hier außermittig, d.h. außerhalb der Drehachse D, angeordnete Längskanäle 14, 15, von denen der eine als Schmiermittelzuleitung und der andere als Schmiermittelableitung 7 dient. Es wäre auch denkbar, einen der Längskanäle mittig und einen außermittig anzuordnen.

Von den Längskanälen 14, 15 führen die Querbohrungen 16a, b; 17a, b jeweils aus den Längskanälen bzw. -leitungen 14, 15 nach außen. Dabei sind die Querbohrungen 16a, b; 17a, b jeweils vorzugsweise parallel (oder alternativ winklig) zur Radialrichtung ausgerichtet und axial in Richtung der Drehachse D zueinander versetzt angeordnet.

Die zwei zusammengehörigen Querbohrungen 16a, b bzw. 17a, b sind parallel zueinander ausgerichtet. Sie können aber auch einen Winkel zueinander und/oder zur Radialrichtung relativ zur Drehachse D einschließen, die hier mittig zwischen den beiden Längskanälen 14, 15 verläuft. Die Querbohrungen 16, 17 sind parallel oder derart winklig zur Radialen ausgerichtet, dass im Betrieb an den Querbohrungen jeweils ein Pump- oder Saugeffekt während der Drehung der Hohlwelle 18 im Betrieb erzeugt wird.

Insbesondere sind jeweils zwei benachbarte Stichkanäle bzw. Querbohrungen 16a, b bzw. 17a, b derart ausgerichtet, dass jeweils durch eine der Querbohrungen - z.B. die Bohrung 16a - Öl in den einen der Längskanäle - z.B. den Kanal 14 - hineingepumpt und durch die andere Querbohrung - z.B. die Bohrung 16b - Luft (ggf. mit einem geringen Ölanteil) aus dem anderen Längskanal - z.B. den Kanal 15 - abgeleitet wird.

Jeweils zwei der hier insgesamt vier Querbohrungen 16a, b; 17a, b münden nach außen hin jeweils in einen gemeinsamen Ringraum 19 eines die Welle umgebenden Drehdurchführungselement 32 bzw. einen Ringraum 20 im Getriebe, wobei an dem Ringraum 19 eine Art Drehdurchführung zwischen dem nicht drehenden und dem drehenden System realisiert wird, der in die Leitung 6 mündet, die mit dem Ölausgleichsbehälter 7 verbunden ist (hier nicht dargestellt).

Der Ringraum 20 steht mit den zu schmierenden Elementen wie den Lagern 2 in Verbindung.

Es ist besonders vorteilhaft, wenn die Querbohrungen 16a, b; 17a, b schälscheibenartig und drehrichtungsunabhängig so ausgebildet werden, dass jeweils ein Kanal 14 pumpt und der andere Kanal 15 saugt.

Fig. 3b zeigt einen Schnitt senkrecht zur Blattebene entlang der Linie A, Fig. 3c einen analogen Schnitt an der Linie B, Fig. 3d einen Schnitt an der Linie C und Fig. 3e einen Schnitt an der Linie D.

Der Ringraum 19 steht mit der Leitung 6 zum Ölausgleichsbehälter 7 in Verbindung. Derart wird auf einfache Weise ein definierter Schmiermittelkreislauf 5 für eine Dekantergetriebeanordnung 1 geschaffen.

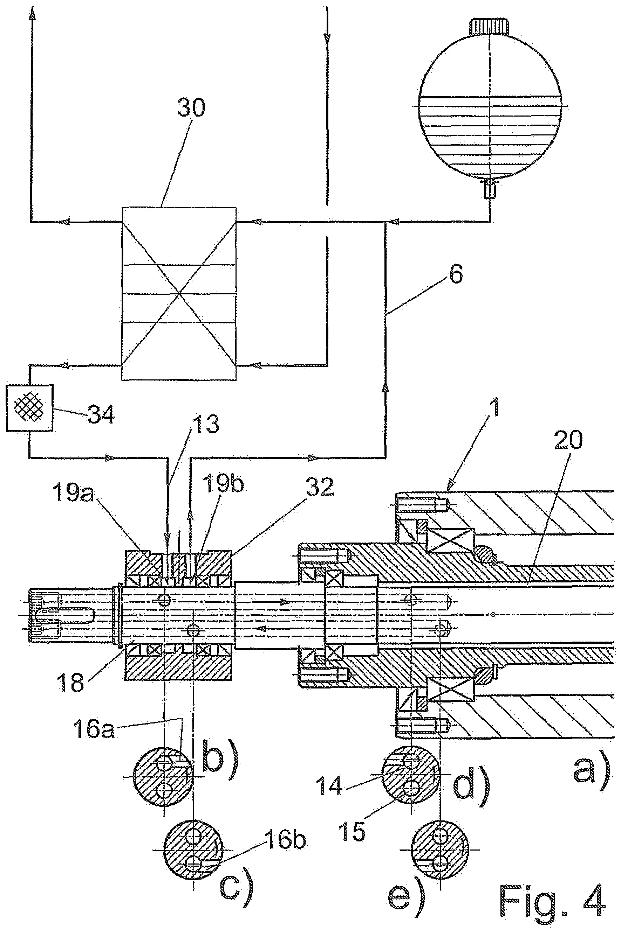

Nach Fig. 4 münden die Querbohrungen 16a, 16b in axial voneinander getrennte Ringräume 19a, 19b eines die Welle 18 umgebenden Drehdurchführungselementes 32 und von dort in getrennte Zu- und Ableitungen 6, 13, welche bis in den Ausgleichsbehälter 7 geführt sind, so dass hier ein vollständiger Schmiermittelskreislauf durch den Ausgleichsbehälter 7 realisiert ist.

Im Bereich der Ableitung 13 ist der Schmiermittel-Ausgleichskreislauf 5 nach Fig. 4 zudem mit einer optionalen Kühlvorrichtung 30 mit einem Kühlmitteldurchlauf 35 und/oder einem optionalem Filter 34 zum Kühlen bzw. Filtern des Schmiermittels (Öls) versehen, die aber nicht bei jeder Konstruktion zwingend vorgesehen sein muss/müssen. Ansonsten entspricht die Anordnung jener der Fig. 3.

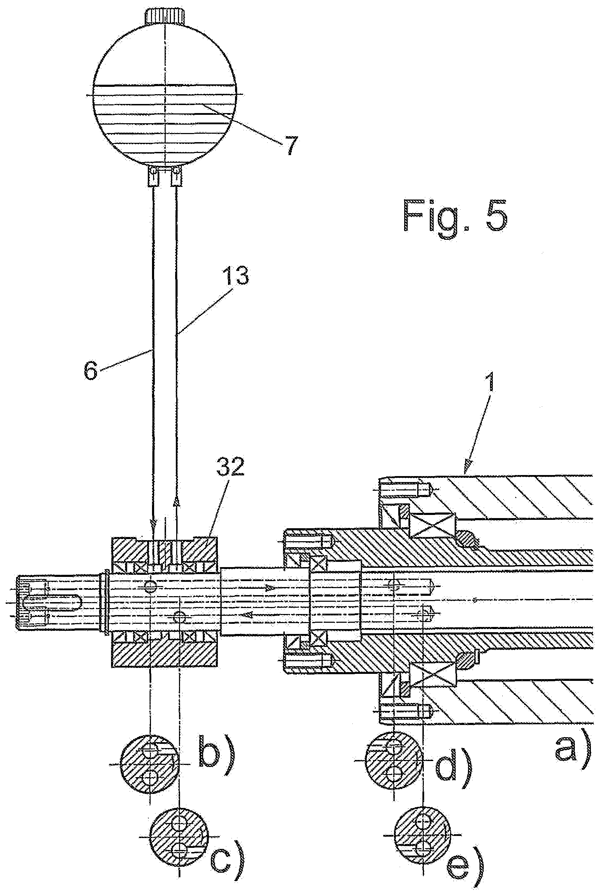

Auch nach Fig. 5 münden die Querbohrungen 16a, 16b in axial voneinander getrennte Ringräume 19a, 19b des die Welle 18 umgebenden Drehdurchführungselementes 32 und von dort in getrennte Zu- und Ableitungen 6, 13, welche hier getrennt voneinander bis in den Ausgleichsbehälter 7 geführt sind, so dass hier ein vollständiger Schmiermittelskreislauf durch den Ausgleichsbehälter 7 realisiert ist..

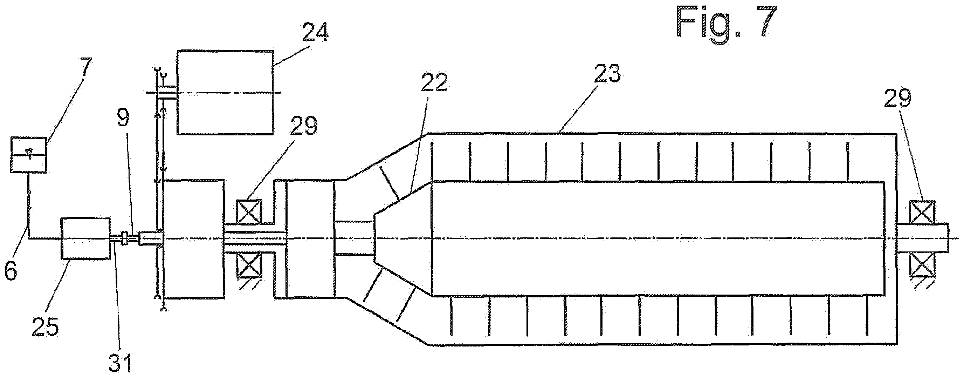

Fig. 7 zeigt eine Vollmantel-Schneckenzentrifuge, deren Getriebeanordnung ebenfalls einen Schmiermittel-Ausgleichsbehälter 7 aufweist, der über eine Leitung 6 und eine hier nicht dargestellte Drehdurchführung Öl in eine den Antriebsmotor 25 durchsetzende Hohlwelle 31 leitet. Die Hohlwelle 31 ist direkt in axialer Verlängerung der Hohlwelle 9 angeordnet und mit dieser drehfest und öldicht verbunden.

**Bezugszeichen**

| | |
|---|---|
| Getriebeanordnung | 1 |
| Lager | 2 |
| Riemenscheiben | 3 |
| Abtriebswellen | 4 |
| Schmiermittel-Ausgleichskreislauf | 5 |
| Zuleitung | 6 |
| Schmiermittel-Ausgleichsbehälter | 7 |
| Drehdurchführung | 8 |
| Hohlwelle | 9 |
| Kanäle | 10 |
| Ringraum | 11 |
| Fördermittel | 12 |
| Ableitung | 13 |
| Längskanäle | 14, 15 |
| Querbohrungen | 16a,b; 17a,b |
| Welle | 18 |
| Ringraum | 19 |
| Raum | 20 |
| Raum | 21 |
| Schnecke | 22 |
| Trommel | 23 |
| Antriebsmotoren | 24, 25 |
| Antriebsriemen | 26, 27 |
| Abtriebswellen | 28 |
| Trommellager | 29 |
| Kühlvorrichtung | 30 |
| Hohlleitung | 31 |
| Drehdurchführung | 32 |
| Drossel | 33 |
| Filter | 34 |
| Kühlmitteldurchlauf | 35 |
| Schmiermitteloberfläche | P |
| Radiale | R |
| Drehachse | D |

## Patentansprüche

1. Getriebeanordnung (1) für eine Schneckenzentrifuge, insbesondere eine Vollmantel-Schneckenzentrifuge mit einer anzutreibenden Trommel (23) und einer vorzugsweise mit einer Differenzdrehzahl zur Trommel (23) anzutreibenden Schnecke (22), wobei die Getriebeanordnung (1) zwischen wenigstens einen oder mehrere Antriebsmotoren (24, 25) und die Schnecke (22) und die Trommel (23) geschaltet ist und wobei die Getriebeanordnung (1) mit einem fließfähigen Schmiermittel nach Art eines Öls dauergefüllt ist, wobei der Getriebeanordnung ein Schmiermittel-Ausgleichssystem mit einem Schmiermittel-Ausgleichsbehälter (7) zugeordnet ist, welcher über eine Leitung (6) mit wenigstens einem Hohlkanal einer als Hohlwelle (9, 18) ausgebildeten Antriebswelle der Getriebeanordnung verbunden ist, **dadurch gekennzeichnet, dass** die Hohlwelle (9, 18) zwei vorzugsweise parallel in axialer Richtung verlaufende Längskanäle (14, 15) aufweist, wobei die Längskanäle (14, 15) außermittig der Drehachse verlaufen oder wobei einer der Längskanäle relativ zur Drehachse mittig und der andere außermittig oder koaxial zum ersten Längskanal verläuft.

2. Getriebeanordnung nach Anspruch 1, **dadurch gekennzeichnet, dass** das Schmiermittel-Ausgleichssystem ein Schmiermittel-Ausgleichskreislauf (5) ist.

3. Getriebeanordnung nach Anspruch 1 oder 2, **dadurch gekennzeichnet, dass** direkt in axialer Verlängerung der Antriebswelle (9, 18) einer der Antriebsmotoren (25) angeordnet ist.

4. Getriebeanordnung nach Anspruch 2 oder 3, **dadurch gekennzeichnet, dass** die Leitung (6) aus dem Ölsammelbehälter (7) in den Hohlkanal der Hohlwelle (9, 18) durch eine zweite Hohlwelle (31) oder einen Hohlwellenabschnitt des Antriebsmotors hindurch erfolgt.

5. Getriebeanordnung nach Anspruch 4, **dadurch gekennzeichnet, dass** die Ölzuleitung aus dem Ölsammelbehälter (7) in die Hohlwelle (9, 18) durch eine Drehdurchführung und wenigstens eine Bohrung (16) in den wenigstens einen axial in der Antriebswelle (9, 18) der Getriebeanordnung verlaufenden Hohlkanal (14) erfolgt.

6. Getriebeanordnung nach einem der vorstehenden Ansprüche 4 oder 5, **dadurch gekennzeichnet, dass** die Ölzuleitung aus dem Ölsammelbehälter in die als Hohlwelle (18) ausgebildete Leitung der Getriebeanordnung durch eine in axialer Verlängerung der Hohlwelle der Getriebeanordnung angeordnete Drehdurchführung (8) erfolgt.

7. Getriebeanordnung nach einem der vorstehenden Ansprüche 4 bis 6, **dadurch gekennzeichnet, dass** das Schmiermittel durch von der Hohlwelle (9) abzweigende Kanäle (10) zu den zu schmierenden Elementen der Getriebeanordnung fließt, von denen es in wenigstens einen Ringraum (11) mit einem Ölspiegel P tritt.

8. Getriebeanordnung nach dem vorstehenden Anspruch 7, **dadurch gekennzeichnet, dass** der Ölspiegel radial und im Ringraum (11) begrenzt ist.

9. Getriebeanordnung nach Anspruch 8, **dadurch gekennzeichnet, dass** der radiale Ölspiegel P im Raum (11) durch ein Fördermittel (12) begrenzt ist.

10. Getriebeanordnung nach Anspruch 9, **dadurch gekennzeichnet, dass** das Fördermittel nach Art eines schälscheibenartige Elements (12) derart ausgelegt ist, dass es im Betrieb nach Art einer Zentripetalpumpe Schmiermittel aus dem sich drehenden System in eine Ableitung (13) ableitet.

11. Getriebeanordnung nach Anspruch 10, **dadurch gekennzeichnet, dass** als das schälscheibenartige Element ein Schöpfrohr (12') vorgesehen ist, das eine Ableitung von Schmiermittel aus einem radial äußeren Bereich der Getriebeanordnung in einen radial inneren Bereich der Getriebeanordnung erlaubt.

12. Getriebeanordnung nach einem der vorstehenden Ansprüche, **dadurch gekennzeichnet, dass** die Antriebswelle (18) zum Einspeisen des Antriebsmomentes für die Schnecke (22) mit einem als Direktantrieb ausgelegten Antriebsmotor (25) für die Schnecke (22) in axialer Verlängerung der Hauptdrehachse der Getriebeanordnung (1) gekoppelt ist, wobei die Schmiermittelzuleitung durch winklig - insbesondere in einer oder mehreren Ebenen senkrecht zu Drehachse D verlaufende Querbohrungen (14, 15) erfolgt, welche in die Hohlwelle (18) münden.

13. Getriebeanordnung nach Anspruch 12, **dadurch gekennzeichnet, dass** die Querbohrungen (16a, b; 17a, b) jeweils axial in Richtung der Drehachse D zueinander versetzt angeordnet sind.

14. Getriebeanordnung nach einem der vorstehenden Ansprüche 12 und 13, **dadurch gekennzeichnet, dass** die Querbohrungen (16a, b; 17a, b) jeweils winklig zur Radialrichtung ausgerichtet sind.

15. Getriebeanordnung nach einem der vorstehenden Ansprüche 12 bis 14, **dadurch gekennzeichnet, dass** die Querbohrungen (16a, b; 17a, b) jeweils parallel zur Radialrichtung ausgerichtet sind.

16. Getriebeanordnung nach einem der vorstehenden Ansprüche 12 bis 15, **dadurch gekennzeichnet, dass** die Querbohrungen (16, 17) derart ausgerichtet sind, dass im Betrieb an den Querbohrungen (16, 17) jeweils ein Pump- oder Saugeffekt während der Drehung der Hohlwelle (18) erzeugt wird.

17. Getriebeanordnung nach einem der vorstehenden Ansprüche 12 bis 16, **dadurch gekennzeichnet, dass** jeweils zwei benachbarte der Querbohrungen (16a, b bzw. 17a, b) derart ausgerichtet sind, dass jeweils durch eine der Querbohrungen Öl in den einen der Längskanäle hineingepumpt und durch die andere Querbohrung Luft und ggf. Öl aus dem anderen Längskanal abgeleitet wird.

18. Getriebeanordnung nach Anspruch 17, **dadurch gekennzeichnet, dass** die Querbohrungen (16a, b; 17a, b) schälscheibenartig und drehrichtungsunabhängig so ausgebildet werden, so dass je einer der Längskanäle (14, 15) pumpt und einer saugt.

19. Getriebeanordnung nach einem der vorstehenden Ansprüche 12 bis 18, **dadurch gekennzeichnet, dass** die Querbohrungen (16a, b) in wenigstens einen gemeinsamen Ringraum (19) oder zwei axial voneinander getrennte Ringräume (19a, 19b) eines die Hohlwelle (18) umgebenden Drehdurchführungselementes (32) münden.

20. Getriebeanordnung nach Anspruch 19, **dadurch gekennzeichnet, dass** von den zwei Ringräumen (19a, 19b) des Drehdurchführungselementes (32) getrennte Zu- und Ableitungen (6, 13) bis in den Ausgleichsbehälter (7) geführt sind.

21. Getriebeanordnung nach einem der vorstehenden Ansprüche, **dadurch gekennzeichnet, dass** der Schmiermittel-Ausgleichskreislauf (5) eine Kühlvorrichtung (30) aufweist.

22. Getriebeanordnung nach einem der vorstehenden Ansprüche, **dadurch gekennzeichnet, dass** der Schmiermittel-Ausgleichskreislauf (5) einen Filter (34) aufweist.

## Claims

1. A gear apparatus (1) for a screw centrifuge, in particular a solid bowl screw centrifuge with a drum (23) to be driven and a screw (22) which is to be driven, preferably at a differential rotational speed relative to the drum (23), the gear apparatus (1) being connected between at least one or more drive motors (24, 25) and the screw (22) and the drum (23) and the gear apparatus (1) being continuously filled with an oil-type free-flowing lubricant, wherein the gear apparatus is associated with a lubricant compensating system with a lubricant compensating container (7), which is connected via a line (6) to at least one hollow channel of a drive shaft of the gear apparatus, the drive shaft being embodied as a hollow shaft (9, 18), **characterized in that** the hollow shaft (9, 18) has two longitudinal channels (14, 15) extending preferably parallel in the axial direction, wherein the longitudinal channels (14, 15) extend eccentrically to the axis of rotation or wherein one of the longitudinal channels extends centrically relative to the axis of rotation and the other extends eccentrically or coaxially with the first longitudinal channel.

2. The gear apparatus as claimed in claim 1, **characterized in that** the lubricant compensating system is a lubricant compensating circuit (5).

3. The gear apparatus as claimed in claim 1 or 2, **characterized in that** one of the drive motors (25) is arranged directly in the axial extension of the drive shaft (9, 18).

4. The gear apparatus as claimed in claim 2 or 3, **characterized in that** the guiding (6) from the oil collecting container (7) into the hollow channel of the hollow shaft (9, 18) is carried out through a second hollow shaft (31) or a hollow shaft portion of the drive motor.

5. The gear apparatus as claimed in claim 4, **characterized in that** oil is fed out of the oil collecting container (7) into the hollow shaft (9, 18) through a rotary lead-through and at least one hole (16) into the at least one hollow channel (14) extending axially in the drive shaft (9, 18) of the gear apparatus.

6. The gear apparatus as claimed in one of the preceding claims 4 or 5, **characterized in that** oil is fed from the oil collecting container into the line of the gear apparatus, the line being embodied as a hollow shaft (18), through a rotary lead-through (8) arranged in the axial extension of the hollow shaft of the gear apparatus.

7. The gear apparatus as claimed in one of the preceding claims 4 to 6, **characterized in that** the lubricant flows through channels (10) branching off from the hollow shaft (9) to the elements to be lubricated of the gear apparatus, from which it enters at least one annular space (11) having an oil level P.

8. The gear apparatus as claimed in the preceding claim 7, **characterized in that** the oil level P is limited radially and in the annular space (11).

9. The gear apparatus as claimed in claim 8, **characterized in that** the radial oil level P in the space (11) is limited by a conveying means (12).

10. The gear apparatus as claimed in claim 9, **characterized in that** the conveying means is designed in the manner of a peeling disk-like element (12) in such a way that during operation it discharges lubricant from the rotating system into a discharge line (13) in the manner of a centripetal pump.

11. The gear apparatus as claimed in claim 10, **characterized in that** the peeling disk-like element provided is a scoop tube (12') which allows lubricant to be discharged from a radially outer region of the gear apparatus into a radially inner region of the gear apparatus.

12. The gear apparatus as claimed in one of the preceding claims, **characterized in that** the drive shaft (18) is coupled, for feeding the driving moment for the screw (22), to a drive motor (25) for the screw (22), the drive motor being designed as a direct drive, in the axial extension of the main axis of rotation of the gear apparatus (1), the lubricant being fed through transverse holes (14, 15) which extend at an angle - in particular in one or more planes perpendicular to the axis of rotation D - and open into the hollow shaft (18).

13. The gear apparatus as claimed in claim 12, **characterized in that** the transverse holes (16a, b; 17a, b) are each arranged so as to be offset from one another axially in the direction of the axis of rotation D.

14. The gear apparatus as claimed in one of the preceding claims, **characterized in that** the transverse holes (16a, b; 17a, b) are each oriented at an angle to the radial direction.

15. The gear apparatus as claimed in one of the preceding claims 12 to 14, **characterized in that** the transverse holes (16a, b; 17a, b) are each oriented parallel to the radial direction.

16. The gear apparatus as claimed in one of the preceding claims 12 to 15, **characterized in that** the transverse holes (16, 17) are oriented in such a way that during operation a respective pumping or suction effect is generated at the transverse holes (16, 17) during the rotation of the hollow shaft (18).

17. The gear apparatus as claimed in one of the preceding claims 12 to 16, **characterized in that** two respective adjacent holes of the transverse holes (16a, b and 17a, b respectively) are oriented in such a way that oil is pumped into one of the longitudinal channels, in each case through one of the transverse holes, and air and if appropriate oil are discharged out of the other longitudinal channel through the other transverse hole.

18. The gear apparatus as claimed in claim 17, **characterized in that** the transverse holes (16a, b; 17a, b) are formed in a peeling disk-like manner and independently of the direction of rotation in such a way that one of the longitudinal channels (14, 15) pumps and one draws in.

19. The gear apparatus as claimed in one of the preceding claims 12 to 18, **characterized in that** the transverse holes (16a,b) open into at least one common annular space (19) or two annular spaces (19a, 19b) of a rotary lead-through element (32) surrounding the hollow shaft (18), the annular spaces being axially separated from each other.

20. The gear apparatus as claimed in claim 19, **characterized in that** feed and discharge lines (6, 13) are guided into the compensating container (7), the feed and discharge lines being separated from the two annular spaces (19a, 19b) of the rotary lead-through element (32).

21. The gear apparatus as claimed in one of the preceding claims, **characterized in that** the lubricant compensating circuit (5) has a cooling device (30).

22. The gear apparatus as claimed in one of the preceding claims, **characterized in that** the lubricant compensating circuit (5) has a filter (34).

## Revendications

1. Disposition d'engrenage (1) pour une centrifugeuse à vis, en particulier une centrifugeuse à vis à bol plein, avec un tambour (23) et une vis (22) à entraîner de préférence à une vitesse de rotation différente du tambour (23), laquelle disposition d'engrenage (1) est montée entre au moins un ou plusieurs moteurs d'entraînement (24, 25) et la vis (22) et le tambour (23) et la disposition d'engrenage (1) est remplie en permanence d'un lubrifiant fluide tel qu'une huile, la disposition d'engrenage étant associée à un système de compensation de lubrifiant avec un réservoir de compensation de lubrifiant (7) qui communique par une conduite (6) avec au mois un canal creux d'un arbre d'entraînement de la disposition d'engrenage conformé comme un arbre creux (9, 18), **caractérisée en ce que** l'arbre creux (9, 18) présente deux canaux longitudinaux (14, 15) de préférence parallèles et orientés dans le sens axial, les canaux longitudinaux (14, 15) étant excentrés par rapport à l'axe de rotation ou l'un des canaux longitudinaux étant centré par rapport à l'axe de rotation et l'autre excentré ou coaxial du premier canal longitudinal.

2. Disposition d'engrenage selon la revendication 1, **caractérisée en ce que** le système de compensation de lubrifiant est un circuit de compensation de lubrifiant (5).

3. Disposition d'engrenage selon la revendication 1 ou 2, **caractérisée en ce que** l'un des moteurs d'entraînement (25) est disposé dans le prolongement direct de l'arbre d'entraînement (9, 18).

4. Disposition d'engrenage selon la revendication 2 ou 3, **caractérisée en ce que** la conduite (6) est réalisée à partir du réservoir collecteur d'huile (7) jusque dans le canal creux de l'arbre creux (9, 18) à travers un deuxième arbre creux (31) ou un segment d'arbre creux du moteur d'entraînement.

5. Disposition d'engrenage selon la revendication 4, **caractérisée en ce que** la conduite d'arrivée est réalisée à partir du bac collecteur d'huile (7) jusque dans l'arbre creux (9, 18) à travers une traversée pivotante et au moins un alésage (16) dans l'au moins un canal creux (14) passant dans le sens axial dans l'arbre d'entraînement (9, 18) de la disposition d'engrenage.

6. Disposition d'engrenage selon l'une des revendications 4 ou 5, **caractérisée en ce que** la conduite d'arrivée d'huile est réalisée à partir du bac collecteur d'huile jusque dans la conduite conformée comme un arbre creux (18) de la disposition d'engrenage à travers une traversée pivotante (8) disposée dans le prolongement axial de l'arbre creux de la disposition d'engrenage.

7. Disposition d'engrenage selon l'une des revendications 4 à 6, **caractérisée en ce que** le lubrifiant s'écoule à travers des canaux (10) bifurquant à partir de l'arbre creux (9) vers les éléments à lubrifier de la disposition d'engrenage, d'où il sort dans au moins un espace annulaire (11) avec un niveau d'huile P.

8. Disposition d'engrenage selon la revendication 7, **caractérisée en ce que** le niveau d'huile est délimité dans le sens radial et dans l'espace annulaire (11).

9. Disposition d'engrenage selon la revendication 8, **caractérisée en ce que** le niveau d'huile radial P dans l'espace (11) est limité par un moyen de transport (12).

10. Disposition d'engrenage selon la revendication 9, **caractérisée en ce que** le moyen de transport est réalisé comme un élément en forme de disque racleur (12), de telle manière qu'en fonctionnement, il évacue le lubrifiant à partir du système en rotation dans une conduite d'évacuation (13) à la manière d'une pompe centripète.

11. Disposition d'engrenage selon la revendication 10, **caractérisée en ce qu'**il est prévu comme élément en forme de disque racleur un tuyau d'aspiration (12') qui permet d'évacuer du lubrifiant d'une région extérieure dans le sens radial de la disposition d'engrenage à une région intérieure dans le sens radial de la disposition d'engrenage.

12. Disposition d'engrenage selon l'une des revendications précédentes, **caractérisée en ce que** l'arbre d'entraînement (18) est couplé, pour transmettre le couple d'entraînement de la vis (22), à un moteur d'entraînement (25) de la vis (22) conçu comme un entraînement direct, dans le prolongement axial de l'axe de rotation principal de la disposition d'engrenage (1), la conduite d'arrivée de lubrifiant passant à travers des alésages transversaux (14, 15) angulés, en particulier perpendiculaires à l'axe de rotation D dans un ou plusieurs plans, qui débouchent dans l'arbre creux (18).

13. Disposition d'engrenage selon la revendication 12, **caractérisée en ce que** les alésages transversaux (16a, b ; 17a, b) sont décalés les uns par rapport aux autres dans le sens axial en direction de l'axe de rotation D.

14. Disposition d'engrenage selon l'une des revendications 12 et 13, **caractérisée en ce que** les alésages transversaux (16a, b ; 17a, b) sont orientés chacun selon un angle par rapport au sens radial.

15. Disposition d'engrenage selon l'une des revendications 12 à 14, **caractérisée en ce que** les alésages transversaux (16a, b ; 17a, b) sont orientés chacun parallèlement au sens radial.

16. Disposition d'engrenage selon l'une des revendications 12 à 15, **caractérisée en ce que** les alésages transversaux (16, 17) sont orientés de telle manière qu'en fonctionnement, un effet de pompage ou d'aspiration soit produit au niveau des alésages transversaux (16, 17) pendant la rotation de l'arbre creux (18).

17. Disposition d'engrenage selon l'une des revendications 12 à 16, **caractérisée en ce que** les alésages transversaux (16a, b ou 17a, b) voisins par paires sont orientés de telle manière que de l'huile soit pompée à travers les alésages transversaux dans l'un des canaux longitudinaux et de l'air et éventuellement de l'huile soient évacués à travers l'autre alésage transversal de l'autre canal longitudinal.

18. Disposition d'engrenage selon la revendication 17, **caractérisée en ce que** les alésages transversaux (16a, b ; 17a, b) sont conformés en forme de disque racleur et indépendants du sens de rotation, de sorte qu'un des canaux longitudinaux (14, 15) pompe et qu'un autre aspire.

19. Disposition d'engrenage selon l'une des revendications 12 à 18, **caractérisée en ce que** les alésages transversaux (16a, b) débouchent dans au moins un espace annulaire commun (19) ou deux espaces annulaires (19a, 19b) d'un élément de traversée rotative (32) entourant l'arbre creux (18) séparés l'un de l'autre.

20. Disposition d'engrenage selon la revendication 19, **caractérisée en ce que** des conduites d'arrivée et d'évacuation (6, 13) séparées sont amenées depuis les deux espaces annulaires (19a, 19b) de l'élément de traversée pivotante (32) jusque dans le bac de compensation (7).

21. Disposition d'engrenage selon l'une des revendications précédentes, **caractérisée en ce que** le circuit de compensation de lubrifiant (5) présente un dispositif de refroidissement (30).

22. Disposition d'engrenage selon l'une des revendications précédentes, **caractérisée en ce que** le circuit de compensation de lubrifiant (5) présente un filtre (34).
